# EUROPÄISCHE PATENTSCHRIFT

(11) **EP 3 298 755 B1**
(45) Veröffentlichungstag und Bekanntmachung des Hinweises auf die Patenterteilung: **10.08.2022**
(21) Anmeldenummer: 16723740.3
(22) Anmeldetag: 18.05.2016
(51) Int. Cl.: H04L 67/12, H04L 69/22

(54) **VERFAHREN ZUR DETEKTION EINES DSRC-SIGNALS IN EINEM KRAFTFAHRZEUG**
METHOD FOR DETECTING A DSRC SIGNAL IN A MOTOR VEHICLE
PROCÉDÉ DE DÉTECTION D'UN SIGNAL DRSC DANS UN VÉHICULE À MOTEUR

(30) Priorität: 22.05.2015 DE 102015209463
(43) Veröffentlichungstag der Anmeldung: 28.03.2018
(73) Patentinhaber: Continental Automotive Technologies GmbH, 30165 Hannover (DE)
(72) Erfinder: MORHART, Christian, 93096 Köfering (DE); GEORGI, Thomas, 93049 Regensburg (DE); MERTEN, Andre, 93080 Pentling (DE); KURSAWE, Christian, 94315 Straubing (DE); FRUTH, Christian, 82331 Parsberg (DE)
(74) Vertreter: Continental Corporation
(86) Internationale Anmeldenummer: PCT/EP2016/061160
(87) Internationale Veröffentlichungsnummer: WO 2016/188824

(56) Entgegenhaltungen:
- DE-A1-102009 045 748
- US-A1- 2006 109 085
- US-A1- 2014 247 838
- US-B2- 8 892 041
- Dieter Smely: "World Class Standards CEN DSRC / ITS G5 CEN DSRC / ITS-G5 coexistence coexistence Basic RF properties", , 1 July 2011 (2011-07-01), XP055579964, Retrieved from the Internet: URL:https://docbox.etsi.org/workshop/2011/ 201107_ITSG5_DSRC/05-Smely_JRC_Plugtest_Co existence_of_CEN_DSRC_and_ITS-G5_V00.pdf [retrieved on 2019-04-10]

## Beschreibung

Die Erfindung betrifft Verfahren und Vorrichtungen zur Detektion eines DSRC-Signals in einem Kraftfahrzeug gemäß den unabhängigen Ansprüchen 1 und 5.

US 8 892 041 B2 offenbart zwischen Road Users ausgetauschte DSRC Messages. Die Internetpublikation "CEN DSRC / ITS G5 coexistence - Basic RF properties", (2011-07-01), XP055579964, offenbart Merkmale eines CEN DSRC Mautsystems mit "onboard units" und "roadside units".

Zur "Car2Car"- Kommunikation (Kommunikation zwischen Fahrzeugen) und "C2X"- Kommunikation (Kommunikation eines Fahrzeugs mit anderen Fahrzeugen und/oder z.B. Infrastruktur wie Baken, Telekommunikationsnetz, Mautstationen usw.) an sich existieren schon einige Ansätze, wie z.B. in DE 10 2008 009 330 A1. US 2006/109085 AI beschreibt u.a. ein TDMA System.

Eine Aufgabe der Erfindung ist es, eine "C2X"- Kommunikation und/oder "Car2Car"- Kommunikation zu optimieren. Die Aufgabe wird jeweils durch den Gegenstand der unabhängigen Patentansprüche gelöst. Einige besonders vorteilhafte Ausgestaltungen der Erfindung sind in den Unteransprüchen und der Beschreibung angegeben.

Ausgestaltungen der Erfindung können insbesondere Teilnehmern einer "C2X"-Kommunikation und/oder "Car2Car"- Kommunikation z.B. in einem oder mehreren Kraftfahrzeugen insbesondere eine effiziente Detektion von DSRC Kommunikation (ggf. beliebiger) ermöglichen.

Weitere Merkmale und Vorteile einiger vorteilhafter Ausgestaltungen der Erfindung ergeben sich aus der nachfolgenden Beschreibung von Ausführungsbeispielen der Erfindung anhand der Zeichnung. Dabei zeigt zur Veranschaulichung von einigen möglichen Ausgestaltungen der Erfindung, jeweils vereinfachend schematisch:
Fig. 1 beispielhaft ein zu detektierendes DSRC Signal mit einigen z.B. durch einen Microcontroller detektierbaren Eigenschaften und unten einen (DSRC)-Detektor mit einer Amplitudendemodulations-Einrichtung und einem Microcontroller,
Fig. 2 ein Modul mit Empfangselementen und eine Weiche zu einem "C2X" und/oder "Car2Car" Modulteil und einem Detektor des Moduls,
Fig. 3 Elemente eines Detektors (z.B. eines Moduls mit einem "C2X" und/oder "Car2Car" Modulteil),
Fig. 4 Elemente eines Detektors (z.B. eines Moduls mit einem "C2X" und/oder "Car2Car" Modulteil) mit einem integrierten RMS/Log- Detektor,
Fig. 5 eine "C2X" und/oder "Car2Car" - Kommunikation.

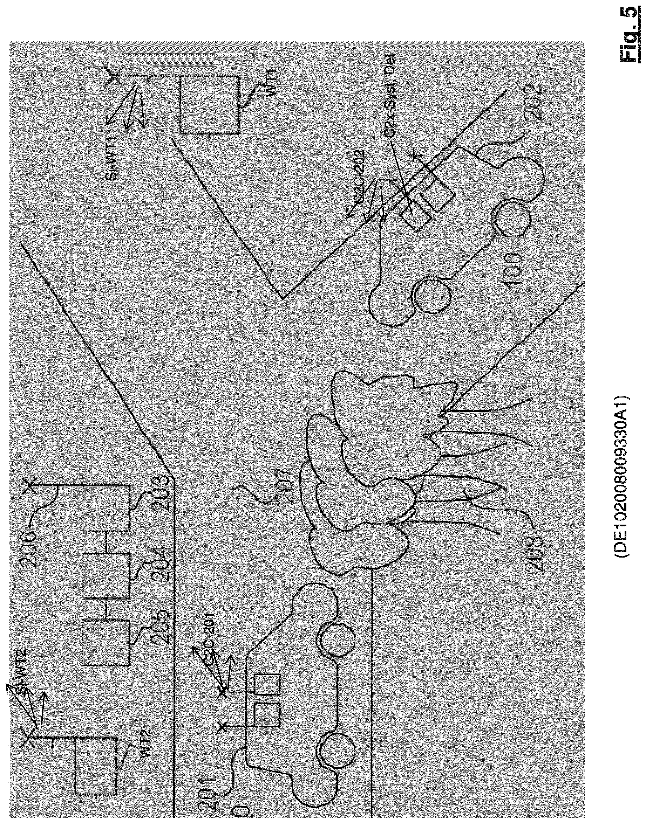

Fig. 5 zeigt eine sogenannte "Car2Car"-Kommunikation (Fahrzeug-Fahrzeug-Kommunikation oder Kommunikation zwischen Fahrzeugen) wie auch teilweise in DE102008009330A1, wobei eine Kommunikation zwischen Fahrzeugen und eine Kommunikation zwischen Fahrzeugen und Infrastruktur (wie Baken und/oder Mobilfunknetzen und/oder Satelliten) dargestellt ist.

Fig. 5 zeigt eine sogenannte "C2X"- Kommunikation (Kommunikation eines Fahrzeugs mit anderen Fahrzeugen und/oder z.B. Infrastruktur wie Baken, Telekommunikationsnetz, Mautstationen usw.) wie beispielsweise auch eine "Car2Car"- Kommunikation (Kommunikation zwischen zwei Fahrzeugen 201, 202), wie auch teilweise ähnlich in DE 10 2008 009 330 A1.

In Fig. 5 erfolgt eine Kommunikation C2C-201, C2C-202 z.B. zwischen zwei oder mehr als zwei Fahrzeugen 201, 202 und/oder zwischen mindestens einem Fahrzeug 201 und einer Infrastruktur Komponente wie z.B. einem Baken-Leitsystem und/oder Mautsystem 203, und zwar z.B. direkt zwischen diesen per Funk mit z.B. in Fig. 5. angedeuteten Signalen C2C-201, C2C-202.

Eine Kommunikation C2C-201, C2C-202 z.B. zwischen zwei oder mehr als zwei Fahrzeugen 201, 202 und/oder zwischen mindestens einem Fahrzeug Fahrzeugen 201 und einer Infrastruktur Komponente wie z.B. einem Baken-Leitsystem und/oder Mautsystem 203 oder anderen z.B. direkt zwischen diesen (also z.B. ohne in der Übertragung zwischen den beiden Fahrzeugen 201, 202 oder zwischen einem Fahrzeug und Infrakstruktur 203 zwischengeschaltetes Mobilfunknetz etc.) kann z.B. in einem Frequenzband 5.8-5.9 GHz erfolgen.

In einem für "C2X"- Kommunikation und/oder "Car2Car"- Kommunikation vorgesehenen Frequenzbereich kann auch eine "DSRC" Kommunikation (=z.B. "Dedicated Short Range Communication") von beliebigen weiteren Teilnehmern erfolgen, z.B. entsprechend EN 12253, EN 13372, EN 12834, EN12795 für CEN DSRC (oder UNI DSRC), wobei z.B. eine AM (Amplitudenmodulation) im sogenannten Downlink (Kommunikation bzw. Datenübertragung zu einem Teilnehmer hin) verwendet werden kann.

"C2X"- Kommunikations- und/oder "Car2Car"- Kommunikations- Teilnehmern 201, 202 und/oder 201, 203 wäre eigentlich eine Detektion einer "DSRC" Kommunikation (=z.B. "Dedicated Short Range Communication") mit Signalen Si-WT1 und/oder Si-WT2 von beliebigen weiteren Teilnehmern WT1, WT2 z.B. möglich mit z.B. einem einfachen "diode envelope detector" (Dioden- / Hüllkurven - Detektor), was aber eventuell anfällig sein könnte für eine Interferenz mit anderen Amplitudenmodulation verwendenden Systemen in einem ähnlichen Frequenzbereich wie z.B. dem der Teilnehmer einer "C2X"- Kommunikations- und/oder "Car2Car"- Kommunikation, die die weiteren Teilnehmer detektieren wollen. Hierfür gibt es seitens Regulierungsbehörden verschiedene Techniken zur Koexistenz z.B. ETSI TS 102 792; diese Techniken können z.B. auf einem "Detect and Avoid" Prinzip (Detektieren und Vermeiden Prinzip) basieren, wobei hinsichtlich einem C2X und/oder C2C System und einer DSRC RSU unterschiedliche Verfahren zur Koexistenz der beiden angewendet werden können.

Z.B. könnte eine Detektion einer "DSRC" Kommunikation (=z.B. "Dedicated Short Range Communication")von "C2X"- Kommunikations- und/oder "Car2Car"-Kommunikations- Teilnehmern 201, 202 und/oder 201, 203 und/oder anderen Signalen Si-WT1 und/oder Si-WT2 von beliebigen weiteren Teilnehmern WT1, WT2 (z.B. im oder benachbart zum Frequenzband für eine "C2X"- Kommunikation und/oder "Car2Car"- Kommunikation von "C2X" und/oder "Car2Car" Teilnehmern 201, 202 und/oder 201, 203) möglich sein mit einer CEN DSRC OBU Kommunikationseinheit als Signal Detektor z.B. in Kombination mit einer C2C Transceiver Einheit, z.B. basierend auf ASIC Komponenten.

Es existieren verschiedene Möglichkeiten für eine Detektion des Vorhandenseins einer "DSRC" Kommunikation mit Signalen Si-WT1 und/oder Si-WT2 von (beliebigen weiteren) Teilnehmern WT1, WT2 wie z.B. einem CEN DSRC Signal bei 5.8 GHz. Die einfachste könnte ein einfacher Leistungsdetektor sein, was aufgrund fehlender Frequenzselektivität und möglichen Vorhandenseins weiterer Kommunikationssysteme in diesem oder einem benachbarten Frequenzbereich wie WLAN aber nicht optimal sein muss.

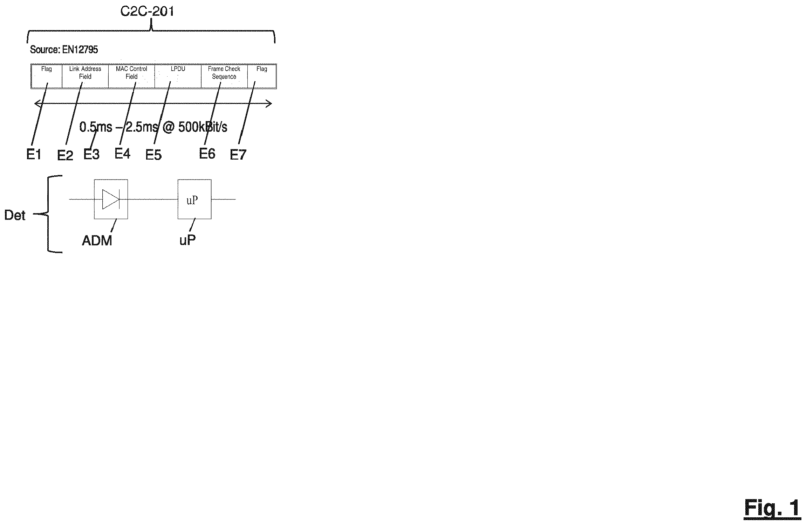

Fig. 1, Fig. 2, Fig. 3 und Fig. 4 verdeutlichen jeweils einige Ausgestaltungen der Erfindung, die z.B. als alternative Ansätze eine effiziente Detektion (mindestens) eines DSRC Signals weiterer Teilnehmer ermöglichen können.

Die dargestellten Ausgestaltungen der Erfindung können z.B. einige Eigenschaften eines empfangenen Signals (insbesondere DSRC Signals) detektieren, um festzustellen, ob speziell ein DSRC Signal vorliegt.

Solche Eigenschaften können z.B. einige oder mehrere der im (z.B. im Internet auffindbaren) Standard EN12795 und/oder Fig. 1 angegebenen (DSRC-Signal-)Eigenschaften eines zu detektierenden DSRC Signals sein.

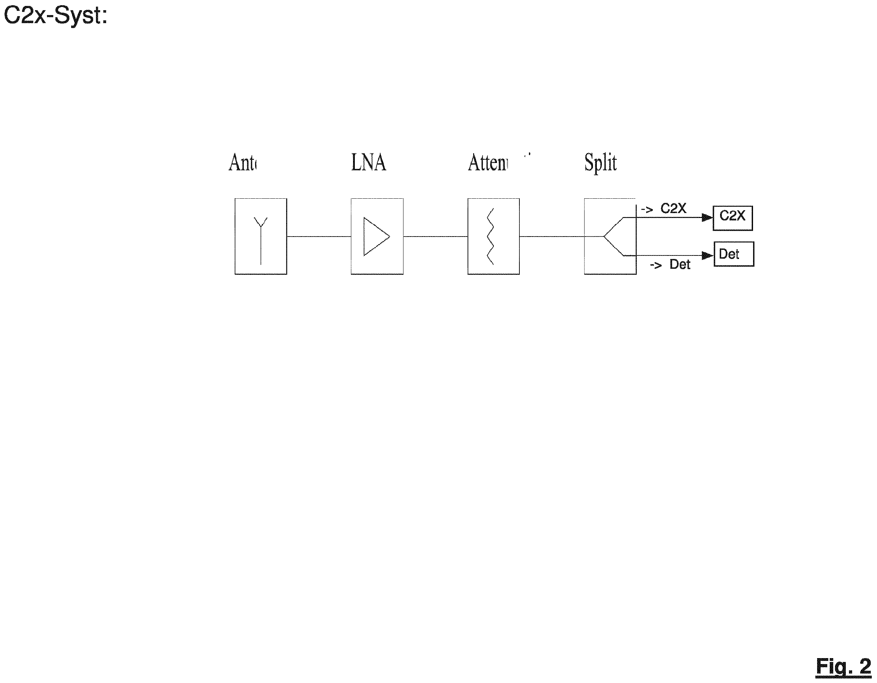

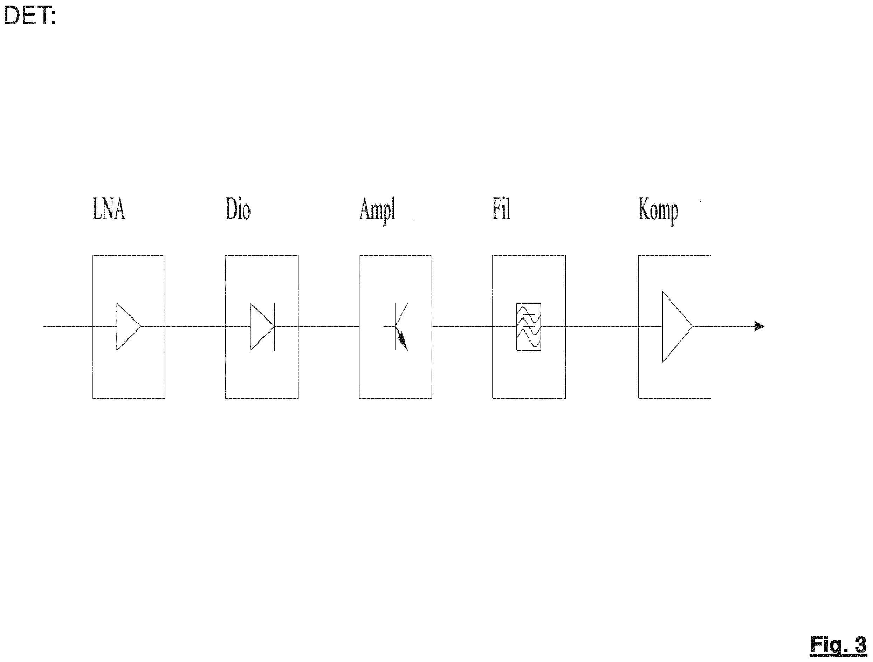

Fig. 1 oben stellt beispielhaft ein Signal (C2C-201) dar, sowie einige Eigenschaften E1-E7 eines zu detektierenden DSRC Signals (wie z.B. Si-WT1), die jeweils untersucht und ggf. detektiert werden können mit einem in Fig. 1 unten gezeigten DSRC Detektor DET (insbesondere mit einer Amplitudendemodulations-Einheit ADM und ihr nachgeschaltet als Auswerteeinrichtung z.B. einem Protokolldetektor uP insbesondere in Form eines Microcontrollers), z.B. mit Anordnungen wie in Fig. 2 und/oder in Fig. 3).

Solche detektierbaren Eigenschaften E1-E7 usw. können z.B. insbesondere sein:
- die sogenannte Präambel oder "preamble" E1 (= z.B. der Anfangsteil eines Signals C2C-201, C2C-202 eines C2X- /C2C Teilnehmers 201, 202 oder eines DSRC Signals eines weiteren Teilnehmers Si-WT1, Si-WT2),
- und/oder die "frame length" (= z.B. die Rahmenlänge oder Frame Länge eines Signals C2C-201, C2C-202 eines C2X- /C2C Teilnehmers 201, 202 oder eines DSRC Signals eines weiteren Teilnehmers Si-WT1, Si-WT2),
- und/oder ein oder mehrere "start flag(s)" E1 (= z.B. eine Bit Sequenz am Anfang eines Signals C2C-201, C2C-202 eines C2X-/C2C Teilnehmers 201, 202 oder eines DSRC Signals eines weiteren Teilnehmers Si-WT1, Si-WT2),
- und/oder oder mehrere "end flag(s)" E7 (= z.B. eine Bit Sequenz am Ende eines DSRC Signals C2C-201, C2C-202 eines C2X- /C2C Teilnehmers 201, 202 oder eines Signals eines weiteren Teilnehmers Si-WT1, Si-WT2),
- und/oder eine "frame check sequence" E6 (= z.B. eine Prüfsumme eines DSRC Signals C2C-201, C2C-202 eines C2X- /C2C Teilnehmers 201, 202 oder eines Signals eines weiteren Teilnehmers Si-WT1, Si-WT2),
- und/oder die (durchschnittliche) DatenRate E3 ("average data rate") eines empfangenen Signals (wie z.B. C2C-201)und/oder DSRC frames, die mit einer Nominalen Datenrate von z.B. 500kbps verglichen werden kann,
- und/oder andere Eigenschaften eines DSRC Frame,
welche Eigenschaften (E1- E7 usw.) eines empfangenen (ANT) Signals (wie z.B. C2C-201, Si-WT1) einzeln oder in beliebiger Kombination (mehrerer Eigenschaften) detektiert werden können.

Dabei könnte z.B. wenn (z.B. je nach Vorgabe im Detektor) eine oder zwei oder mehr als zwei solche Eigenschaften (E1- E7 usw.) eines empfangenen (ANT) Signals (wie z.B. C2C-201, Si-WT1) detektiert werden, entschieden werden, dass es sich z.B. um ein DSRC Signal Si-WT1 handelt, und wenn keine oder weniger als eine z.B. vorgegebene Anzahl solcher Eigenschaften (E1- E7 usw.) eines empfangenen (ANT) Signals (wie z.B. C2C-201, Si-WT1) detektiert werden, entschieden werden, dass es sich C2C-201 z.B. nicht um ein DSRC Signal handelt.

Eine vorteilhafte Ausgestaltung kann in einer Integration eines Detektors (Detektors der Eigenschaften wie z.B. die in Fig. 1 oben dargestellten) insbesondere in ein C2C System in z.B. einem Kraftfahrzeug 201, 202 unter Verwendung von ohnehin für die C2C / C2X Kommunikation vorgesehener Infrastruktur in einem Kraftfahrzeug 201, 202 (z.B. anstatt einem separaten Modul) bestehen.

Eine erfindungsgemäße Ausgestaltung einer Detektionseinrichtung kann z.B. eine Antenne und/oder LNA einer C2C-Einrichtung in einem Kraftfahrzeug 201, 202 verwenden und/oder dasselbe Frequenzband verwenden und/oder sowohl zur DSRC Detektion von Signalen Si-WT1, Si-WT2 weiterer Teilnehmer WT1, WT2 und/oder zur Erhöhung der Empfindlichkeit verwenden. Ein LNA (z.B. ein Low Noise Amplifier oder Verstärker) kann ohnehin in einem C2C und/oder C2X System C2X-Syst in einem Kraftfahrzeug 201, 202 vorgesehen sein, um z.B. den Einfluss von Dämpfungen zu reduzieren und/oder die Rauschkennzahlen des Systems zu verbessern.

Eine DSRC Detektion von z.B. Signalen Si-WT1, Si-WT2 weiterer Teilnehmer WT1, WT 2 kann z.B. nach einer C2X Kommunikation eines C2X System C2X-Syst eines Kraftfahrzeugs 201 (z.B. in demselben Modul C2X-Syst) stattfinden. Zur Separierung eines (input) Signals (wie von Signalen Si-WT1, Si-WT2 weiterer Teilnehmer WT1, WT2) kann ein zusätzlicher Splitter vorgesehen sein.

Fig. 2 und Fig. 3 zeigen jeweils erfindungsgemäße Ausgestaltungen eines DSRC Detektors, insbesondere in einer partiellen Integration mit einem C2x / C2C Modul C2x-Syst für ein Kraftfahrzeug 202.

Ein C2X System C2X-Syst eines Kraftfahrzeugs 201 kann z.B. wie in Fig. 2 dargestellt zum Empfang insbesondere eine Antenne Ant aufweisen, insbesondere eine Antenne Ant, die auch Signale für eine C2X /C2C Kommunikationsmodul in einem Kraftfahrzeug 202 sendet und/oder empfängt, sowie einen Verstärker LNA, insbesondere einen Verstärker LNA, der auch (z.B. empfangene) Signale für eine C2X /C2C Kommunikationsmodul in einem Kraftfahrzeug 202 verstärkt,
sowie einen Attenuator Atten, insbesondere einen, der auch (z.B. empfangene) Signale für eine C2X /C2C Kommunikationsmodul in einem Kraftfahrzeug 202 bearbeitet,
sowie einen Splitter Split, der mit der Antenne Ant empfangene Signale (z.B. Si-WT1, und/oder C2C-201) zu einem C2X /C2C Kommunikationsmodul in einem Kraftfahrzeug 202 führen und zu einem Detektor Det im Kraftfahrzeug 202 führen kann, der (Det) Signale beispielsweise hinsichtlich der z.B. in Fig. 1 veranschaulichten Eigenschaften detektiert.

Fig. 3 zeigt einen (DSRC-Signal-) Detektor DET (z.B. wie in Fig. 1 unten und/oder Fig. 2), der seriell hinter einem Amplitudendemodulator ADM eines Detektors DSRC-DECT geschaltet sein kann.

Ein Detektions-Modul DET für DSRC Signale umfasst hier einen optionalen Verstärker LNA, (als AM Detektor z.B. eine) eine Diode Dio, einen (ZF-)Verstärker Ampl, einen (ZF-)Filter Fil und einen (optionalen) Komparator Komp. Bei Verwendung eines Komparators Komp kann der Detektor auch ohne Verwendung eines im Microcontroller integrierten ADCs arbeiten.

Integrierte ADCs in üblichen Standard Microcontrollern können evtl. selten eine Abtast (sample) Geschwindigkeit im Mega- Bit pro Sekunde- Bereich erreichen; darum können alternative Lösungen zur Datenakquisition verwendet werden.

Zwei grundlegende Methoden werden insbesondere vorgeschlagen:
Eine solche Ausgestaltung der Erfindung mit einer Datenakquisition mit einer Standard Timer-Input-Abtastproben-Abtastung (standard timer input capture sampling), und eine zweite Ausgestaltung der Erfindung mit einer Überabtastung (oversampling) des Signals unter Verwendung einer Microcontroller SPI Einheit.

Ein Vorteil des ersten Ansatzes kann eine sehr genaue Detektion der Datenrate unter Mittelung mehrfacher aufeinanderfolgender Samples sein. Dies kann den Einfluss von Jitter einzelner Sample (Abtastproben) begrenzen. Ein Nachteil dieser Methode kann in einem höheren Rechenaufwand zur Dekodierung von Machester kodierten Bits liegen.

Der zweite Ansatz kann den Vorteil von einfacherer Datendekodierung haben, weil das Amplituden-modulierte Signal direkt in Datenbits konvertiert werden kann. Die Abtast-Frequenz oder Abtastrate (sampling frequency) kann von einer SPI clock Frequenz gesteuert werden. Ein Nachteil dieses Ansatzes kann eine weniger präzise Datenraten Exklusion sein, weil die Detektion von Abtast Verletzungen (also dass die Datenrate nicht die Abtastfrequenz matcht oder ihr entspricht) eine längere Überwachungszeit des Datenstroms (Empfänger Signale) erfordern kann.

Für insbesondere eine optimierte Leistung eines Detektors Det können beide Ansätze auch kombiniert werden, also ein SPI Abtastverfahren für eine effiziente, wenig CPU Last verursachende Dekodierung, mit einer Daten Abtastung (data edge sampling) für eine präzise Datenraten-Detektion.

Die Sensitivität des gesamten Systems kann erhöht werden durch einen optionalen RF LNA Verstärker vor dem Detektor Det. Ein ZF Filter ist nicht erforderlich für eine reine Demodulation, kann aber die Robustheit hinsichtlich Interferenz erhöhen.

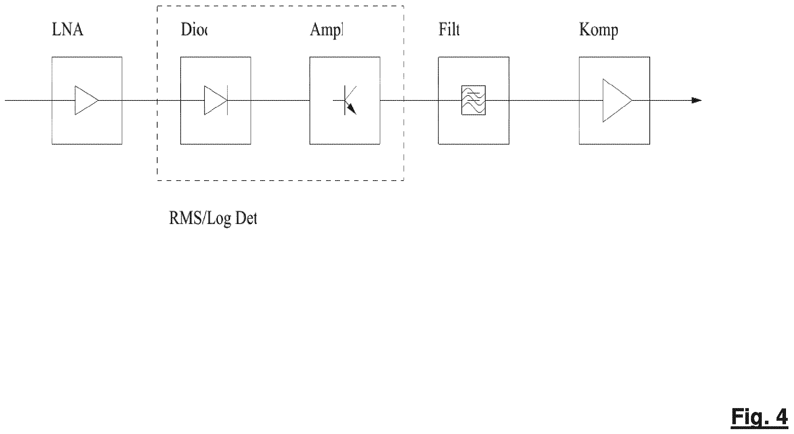

Fig. 4 zeigt als weitere alternative Ausgestaltung der Erfindung einen Einsatz einer gestrichelt dargestellten integrierten Komponente die einige oder alle Elemente der Kette vereinigt.

Ein in Fig. 4 angedeutetes RMS und/oder ein logarithmischer Detektor mit hinreichender Bandbreite kann verwendet werden, um eine Diode mit einem Verstärker zu kombinieren.

Alle anderen Komponenten können optionale Komponenten sein; es ist eine Kombination eines solchen Detektors mit einem Microcontroller möglich (wofür ggf. ein interner ADC verwendet würde).

Der Microcontroller selbst kann Software für eine Frame Detektion oder Rahmen Detektion oder Detektion von o.g. Eigenschaften eingehender Signale aufweisen. Die Frame Detektion oder Rahmen Detektion oder Detektion von o.g. Eigenschaften eingehender Signale kann z.B. wie oben angegeben ablaufen.

Ein wichtiger Aspekt und/oder Vorteil von Ausgestaltungen der Erfindung kann in einem DSRC Detektor für eine C2C Kommunikation liegen. Ein DSRC Detektor kann z.B. nur Komponenten für einen Empfangspfad und/oder RX Pfad aufweisen. Die Verwendung von Standard DSRC ASICs mit vollem Tx and Rx Pfad ist nicht erforderlich. Für die Auswertung uP kann ein Empfangspfad ausreichen.

Wenn mit einem Detektor Det in einem für "C2X"- Kommunikation und/oder "Car2Car"- Kommunikation vorgesehenen Frequenzbereich eine z.B. "DSRC" Kommunikation (=z.B. "Dedicated Short Range Communication") von beliebigen weiteren Teilnehmern (wie z.B. WT1, WT2 in Fig. 5) detektiert wird, könnte unterschiedlich reagiert werden, es kann z.B. diese Detektion angezeigt werden als z.B. potentielle Störung, und/oder beim Senden eines Moduls für "C2X"-Kommunikation und/oder "Car2Car"- Kommunikation im Fahrzeug könnte dieses mit mehr Leistung und/oder nochmals senden oder ein anderes sendendes Fahrzeug zum nochmaligen Senden und/oder Senden mit mehr Leistung und/oder Senden mit einem anderen Übertragungsverfahren auffordern etc.

## Patentansprüche

1. Verfahren zur Detektion eines DSRC Signals in Form eines CEN DSRC Mautsystem Signals (C2C-201; Si-WT1) in einem Kraftfahrzeug (201;202) mit einem CEN DSRC Mautsystem, mit einem Modul (C2x-Syst, Det) mit einem "C2X"- Kommunikations-System und/oder "Car2Car"- Kommunikations-System (C2x-Syst) eines Kraftfahrzeugs (201),
wobei nach einer Amplitudendemodulation (ADM) des empfangenen (ANT) Signals (C2C-201; Si-WT1) eine oder mehrere Eigenschaften (E1-E7) des empfangenen (ANT) Signals (C2C-201; Si-WT1) mit einem Protokolldetektor (uP) des Moduls für "C2X"- Kommunikation und/oder "Car2Car"-Kommunikation im Fahrzeug untersucht werden,
wobei im Falle einer Detektion eines DRSC Signals reagiert wird, indem das Modul für "C2X"- Kommunikation und/oder "Car2Car"- Kommunikation im Fahrzeug ein anderes sendendes Fahrzeug zum nochmaligen Senden und/oder Senden des empfangenen (ANT) Signals (C2C-201; Si-WT1) mit mehr Leistung und/oder Senden mit einem anderen Übertragungsverfahren auffordert.

2. Verfahren nach Anspruch 1,
wobei Eigenschaften (E1-E7) des empfangenen (ANT) Signals (C2C-201), die mit einem Protokolldetektor in Form eines Microcontrollers (uP) untersucht werden,
eine oder mehrere der Folgenden sind:
- der Anfangsteil (E1) des Signals (C2C-201),
- die Rahmenlänge (E3) des Signals (C2C-201),
- eine Bit Sequenz (E1) am Anfang des Signals (C2C-201),
- eine Bit Sequenz (E7) am Ende des Signals (C2C-201)
- eine Prüfsumme (E6) des Signals (C2C-201)
- eine insbesondere durchschnittliche Datenrate (E3) des Signals (C2C-201).

3. Verfahren nach einem der vorhergehenden Ansprüche, wobei eine oder mehrere Eigenschaften (E1-E7) des empfangenen (ANT) Signals (C2C-201) nach einer Abtastung mit einem Protokolldetektor in Form eines Microcontrollers (uP) untersucht werden.

4. Verfahren nach einem der vorhergehenden Ansprüche, wobei eine Überabtastung des empfangenen (ANT) Signals (C2C-201) erfolgt.

5. Vorrichtung (DET) in Form eines CEN DSRC Mautsystems zur Detektion eines DSRC Signals in Form eines CEN DSRC Mautsystem Signals (C2C-201) für ein Kraftfahrzeug (201;202), mit einer kraftfahrzeugseitigen Einrichtung zur Amplitudendemodulation (ADM) des empfangenen (ANT) Signals (C2C-201) in einem Kraftfahrzeug (201; 202), und mit einem kraftfahrzeugseitigen Protokolldetektor (uP) in einem Modul für "C2X"- Kommunikation und/oder "Car2Car"-Kommunikation im Fahrzeug, zur Untersuchung von einer oder mehreren Eigenschaften (E1-E7) des empfangenen (ANT) Signals (C2C-201; Si-WT1),
wobei die Vorrichtung dazu ausgebildet ist dass im Falle einer Detektion eines DRSC Signals reagiert wird, indem das Modul für "C2X"- Kommunikation und/oder "Car2Car"- Kommunikation im Fahrzeug ein anderes sendendes Fahrzeug zum nochmaligen Senden und/oder Senden des empfangenen (ANT) Signals (C2C-201; Si-WT1) mit mehr Leistung und/oder Senden mit einem anderen Übertragungsverfahren auffordert.

6. Vorrichtung nach Anspruch 5, wobei Eigenschaften (E1-E7) des empfangenen (ANT) Signals (C2C-201; Si-WT1), die mit einem Protokolldetektor in Form insbesondere eines Microcontrollers (uP) untersucht werden, eine oder mehrere der Folgenden sind:
- der Anfangsteil (E1) des Signals (C2C-201; Si-WT1),
- die Rahmenlänge (E3) des Signals (C2C-201; Si-WT1),
- eine Bit Sequenz (E1) am Anfang des Signals (C2C-201; Si-WT1),
- eine Bit Sequenz (E7) am Ende des Signals (C2C-201; Si-WT1),
- eine Prüfsumme (E6) des Signals (C2C-201; Si-WT1),
- eine insbesondere durchschnittliche Datenrate (E3) des Signals (C2C-201; Si-WT1).

7. Vorrichtung (Det) nach Anspruch 5 oder 6, wobei sie Teil eines Moduls (C2x-Syst, Det) mit einem "C2X"-Kommunikations-System und/oder "Car2Car"- Kommunikations-System (C2x-Syst) eines Kraftfahrzeugs (201) ist.

8. Vorrichtung (Det) nach einem der Ansprüche 5-7, wobei sie einen einer Antenne (Ant) nachgeschalteten Splitter (Split) aufweist, der empfangene Signale (Si-WT1, C2C-201) zu einem "C2X"- Kommunikations-System und/oder "Car2Car"-Kommunikations-Systems (C2x-Syst) eines Kraftfahrzeugs (201) leitet und zu einem Detektor (Det) leitet, um (Det) die Eigenschaften (E1-E7) zu detektieren.

9. Vorrichtung (Det) nach einem der Ansprüche 5-8, mit einer einer kraftfahrzeugseitigen Einrichtung zur Amplitudendemodulation (ADM) vorgeschalteten Empfangseinrichtung (ANT).

10. Vorrichtung (Det) nach einem der Ansprüche 5-9, mit einem Protokolldetektor in Form eines Microcontrollers (uP).

## Claims

1. Method for detecting a DSRC signal in the form of a CEN DSRC toll system
signal (C2C-201; Si-WT1) in a motor vehicle (201; 202) having a CEN DSRC toll system,
having a module (C2x-Syst, Det) comprising a "C2X" communications system and/or "Car2Car" communications system (C2x-Syst) of a motor vehicle (201),
wherein, after amplitude demodulation (ADM) of the received (ANT) signal (C2C-201; Si-WT1),
one or more properties (E1-E7) of the received (ANT) signal (C2C-201; Si-WT1) are examined by a protocol detector (uP) of the module for "C2X" communication and/or "Car2Car" communication in the vehicle,
wherein, if a DRSC signal is detected, the reaction is the module for "C2X" communication and/or "Car2Car" communication in the vehicle asking another transmitting vehicle to transmit the received (ANT) signal (C2C-201; Si-WT1) again and/or to transmit it with more power and/or to transmit it using a different transmission method.

2. Method according to Claim 1,
wherein properties (E1-E7) of the received (ANT) signal (C2C-201) which are examined by a protocol detector in the form of a microcontroller (uP) are one or more of the following:
- the preamble (E1) of the signal (C2C-201),
- the frame length (E3) of the signal (C2C-201),
- a bit sequence (E1) at the start of the signal (C2C-201),
- a bit sequence (E7) at the end of the signal (C2C-201),
- a checksum (E6) of the signal (C2C-201),
- a, in particular average, data rate (E3) of the signal (C2C-201).

3. Method according to any of the preceding claims,
wherein
one or more properties (E1-E7) of the received (ANT) signal (C2C-201) after sampling are examined by a protocol detector in the form of a microcontroller (uP).

4. Method according to any of the preceding claims,
wherein
the received (ANT) signal (C2C-201) is oversampled.

5. Device (DET) in the form of a CEN DSRC toll system for detecting a DSRC
signal in the form of a CEN DSRC toll system signal (C2C-201) for a motor vehicle (201; 202),
comprising an in-vehicle device for amplitude demodulation (ADM) of the received (ANT) signal (C2C-201) in a motor vehicle (201; 202),
and comprising an in-vehicle protocol detector (uP), in a module for "C2X" communication and/or "Car2Car" communication in the vehicle, for examining one or more properties (E1-E7) of the received (ANT) signal (C2C-201; Si-WT1),
wherein the device is designed such that,
if a DRSC signal is detected, the reaction is the module for "C2X" communication and/or "Car2Car" communication in the vehicle asking another transmitting vehicle to transmit the received (ANT) signal (C2C-201; Si-WT1) again and/or to transmit it with more power and/or to transmit it using a different transmission method.

6. Device according to Claim 5,
wherein
properties (E1-E7) of the received (ANT) signal (C2C-201; Si-WT1) which are examined by a protocol detector, in particular in the form of a microcontroller (uP), are one or more of the following:
- the preamble (E1) of the signal (C2C-201; Si-WT1),
- the frame length (E3) of the signal (C2C-201; Si-WT1),
- a bit sequence (E1) at the start of the signal (C2C-201; Si-WT1),
- a bit sequence (E7) at the end of the signal (C2C-201; Si-WT1),
- a checksum (E6) of the signal (C2C-201; Si-WT1),
- a, in particular average, data rate (E3) of the signal (C2C-201; Si-WT1).

7. Device (Det) according to Claim 5 or Claim 6,
wherein
it is part of a module (C2x-Syst, Det) comprising a "C2X" communication system and/or "Car2Car" communication system (C2x-Syst) of a motor vehicle (201).

8. Device (Det) according to any of Claims 5-7,
wherein
it comprises a splitter (Split) which is connected downstream of an antenna (Ant) and guides received signals (Si-WT1, C2C-201) to a "C2X" communication system and/or "Car2Car" communication system (C2x-Syst) of a motor vehicle (201), and guides said signals to a detector (Det) in order to detect the properties (E1-E7).

9. Device (Det) according to any of Claims 5-8,
comprising a receiver (ANT) connected upstream of an in-vehicle device for amplitude demodulation (ADM).

10. Device (Det) according to any of Claims 5-9,
comprising a protocol detector in the form of a microcontroller (uP).

## Revendications

1. Procédé permettant de détecter un signal DSRC sous la forme d'un signal de système de péage CEN DSRC (C2C-201 ; Si-WT1) dans un véhicule automobile (201 ; 202), comprenant
un système de péage CEN DSRC,
un module (C2x-Syst, Det) pourvu d'un système de communication C2X (voiture à autre objet connecté) et/ou d'un système de communication Car2Car (voiture à voiture) (C2x-Syst) d'un véhicule automobile (201),
dans lequel, après une démodulation en amplitude (ADM) du signal (C2C-201 ; Si-WT1) reçu (ANT), une ou plusieurs propriétés (E1 à E7) du signal (C2C-201 ; Si-WT1) reçu (ANT) sont examinées par un détecteur de protocole (uP) du module pour la communication C2X et/ou la communication Car2Car dans le véhicule,
dans lequel, en cas de détection d'un signal DRSC, une réaction intervient en ce que le module pour la C2X et/ou la communication Car2Car dans le véhicule invite un autre véhicule émetteur à réémettre et/ou à émettre le signal (C2C-201 ; Si-WT1) reçu (ANT) avec plus de puissance et/ou à émettre par un autre procédé de transmission.

2. Procédé selon la revendication 1,
dans lequel les propriétés (E1 à E7) du signal (C2C-201) reçu (ANT) qui sont examinées par un détecteur de protocole sous la forme d'un microcontrôleur (uP), sont une ou plusieurs des suivantes :
- la partie initiale (E1) du signal (C2C-201),
- la longueur de trame (E3) du signal (C2C-201),
- une séquence de bits (E1) au début du signal (C2C-201),
- une séquence de bits (E7) à la fin du signal (C2C-201),
- une somme de contrôle (E6) du signal (C2C-201),
- un débit de données (E3), en particulier moyen, du signal (C2C-201).

3. Procédé selon l'une quelconque des revendications précédentes, dans lequel une ou plusieurs propriétés (E1 à E7) du signal (C2C-201) reçu (ANT) sont examinées après un échantillonnage par un détecteur de protocole sous la forme d'un microcontrôleur (uP).

4. Procédé selon l'une quelconque des revendications précédentes, dans lequel un suréchantillonage du signal (C2C-201) reçu (ANT) est effectué.

5. Dispositif (DET) sous la forme d'un système de péage CEN DSRC permettant de détecter un signal DSRC sous la forme d'un signal de système de péage CEN DSRC (C2C-201) pour un véhicule automobile (201 ; 202), comprenant
un dispositif côté véhicule automobile servant à la démodulation en amplitude (ADM) du signal (C2C-201) reçu (ANT) dans un véhicule automobile (201 ; 202), et
un détecteur de protocole (uP) côté véhicule automobile dans un module pour la communication C2X et/ou la communication Car2Car dans le véhicule, afin d'examiner une ou plusieurs propriétés (E1 à E7) du signal (C2C-201 ; Si-WT1) reçu (ANT),
le dispositif étant réalisé pour qu'en cas de détection d'un signal DRSC une réaction intervienne en ce que le module pour la communication C2X et/ou la communication Car2Car dans le véhicule invite un autre véhicule émetteur à réémettre et/ou à émettre le signal (C2C-201 ; Si-WT1) reçu (ANT) avec plus de puissance et/ou à émettre par un autre procédé de transmission.

6. Dispositif selon la revendication 5, dans lequel des propriétés (E1 à E7) du signal (C2C-201 ; Si-WT1) reçu (ANT) qui sont examinées par un détecteur de protocole sous la forme en particulier d'un microcontrôleur (uP) sont une ou plusieurs des suivantes :
- la partie initiale (E1) du signal (C2C-201 ; Si-WT1),
- la longueur de trame (E3) du signal (C2C-201 ; Si-WT1),
- une séquence de bits (E1) au début du signal (C2C-201 ; Si-WT1),
- une séquence de bits (E7) à la fin du signal (C2C-201 ; Si-WT1),
- une somme de contrôle (E6) du signal (C2C-201 ; Si-WT1),
- un débit de données (E3), en particulier moyen, du signal (C2C-201; Si-WT1).

7. Dispositif (Det) selon la revendication 5 ou 6, dans lequel celui-ci fait partie d'un module (C2x-Syst, Det) pourvu d'un système de communication C2X et/ou d'un système de communication Car2Car (C2x-Syst) d'un véhicule automobile (201).

8. Dispositif (Det) selon l'une quelconque des revendications 5 à 7, dans lequel celui-ci présente un répartiteur (Split) connecté en aval d'une antenne (Ant) et qui achemine des signaux reçus (Si-WT1, C2C-201) à un système de communication C2X et/ou à un système de communication Car2Car (C2x-Syst) d'un véhicule automobile (201) et les achemine à un détecteur (Det) afin de détecter (Det) les propriétés (E1 à E7).

9. Dispositif (Det) selon l'une quelconque des revendications 5 à 8, comprenant un dispositif récepteur (ANT) connecté en amont du dispositif côté véhicule automobile pour la démodulation en amplitude (ADM).

10. Dispositif (Det) selon l'une quelconque des revendications 5 à 9, comprenant un détecteur de protocole sous la forme d'un microcontrôleur (uP).
